# EUROPÄISCHE PATENTANMELDUNG

(11) **EP 0 877 457 A1**
(43) Veröffentlichungstag der Anmeldung: **11.11.1998**
(21) Anmeldenummer: 98105065.1
(22) Anmeldetag: 20.03.1998
(51) Int. Cl.: H02B 1/24

(54) **Elektrische Schaltanlage**

(30) Priorität: 07.05.1997 DE 19719281
(71) Anmelder: ABB PATENT GmbH, 68309 Mannheim (DE)
(72) Erfinder: Körber, Franz-Josef, Dipl.-Ing., 63674 Altenstadt (DE); König, Werner, 68542 Heddesheim (DE)
(74) Vertreter: Rupprecht, Klaus, Dipl.-Ing.

(57) **Zusammenfassung**

Eine elektrische Schaltanlage in H-Schaltung, mit wenigstens je einem Leistungsschalter in je einer H-Schenkelleitung und einer die beiden Schenkelleitungen verbindenden Stegleitung, in der wenigstens ein Schalter untergebracht ist, ist dadurch gekennzeichnet, daß in der Stegleitung zwei Trennschalter (27, 28) eingesetzt sind, und daß der zwischen den Trennschaltern (27, 28) liegende Stegleitungsabschnitt über einen Erdungsschalter geerdet ist.

## Beschreibung

Die Erfindung betrifft eine elektrische Schaltanlage gemäß dem Oberbegriff des Anspruches 1.

Schaltanlagen in H-Schaltung sind aus dem Asea Brown Boveri Taschenbuch, Schallanlagen, 9. Auflage, Cornelsen Giradet-Verlag, 1992, 1994, Seite 464, bekannt geworden. Die H-Schaltung mit Leistungsschaltern besitzt vier Leistungsschalter, von denen je zwei in Reihe geschaltet sind; die beiden Strompfade zwischen den beiden Leistungsschaltern jeder Reihe sind miteinander verbunden; in der Verbindungsleitung befindet sich ein Trenner.

Aufgabe der Erfindung ist es, eine elektrische Schaltanlage der eingangs genannten Art zu schaffen, bei der bei minimiertem Einsatz von Bauteilen und Schaltgeräten ein Maximum an Verfügbarkeit, Betriebssicherheit und Sicherheit des Personals erzielt wird.

Diese Aufgabe wird erfindungsgemäß gelöst durch die kennzeichnenden Merkmale des Anspruches 1.

Erfindungsgemäß befinden sich in der Verbindungsleitung zwischen den Leistungsschaltern, die als Steg bezeichnet wird, zwei Trennschalter, zwischen denen der Steg mittels eines Erdungsschalters erdbar ist.

Wenigstens einer der Trennschalter kann als Lasttrennschalter ausgebildet sein.

Die doppelte Trennung im Steg ermöglicht beim Ausfall eines Stiches eine doppelte Trennstrecke mit einem geerdeten Mittelpunkt; fällt ein Abgang aus, dann kann von dem einspeisenden Transformator auch in den Parallelstich eingespeist werden. Wenn revidiert wird, ist ein zusätzlicher Schottraum vor dem zu revidierenden Gerät vorhanden.

Wenn vier Leistungsschalter in der H-Schaltung vorgesehen sind, dann kann die Schaltung sowohl in eine Ringschaltung integriert werden als auch für Stichleitungen verwendet werden.

Weitere vorteilhafte Ausgestaltungen und Verbesserungen der Erfindung sind den weiteren Unteransprüchen zu entnehmen.

Anhand der Zeichnung, in der ein Ausführungsbeispiel der Erfindung dargestellt ist, sollen die Erfindung sowie weitere vorteilhafte Ausgestaltungen und Verbesserungen und weitere Vorteile näher erläutert und beschrieben werden.

Es zeigen:
- Fig. 1: eine erfindungsgemäße H-Schaltung,
- Fig. 2: den Einsatz der erfindungsgemäßen H-Schaltung in einer Ringschaltung,
- Fig. 3: eine schematische Darstellung der Schaltanlage in bekannter Anordnung, und
- Fig. 4: eine schematische Darstellung der erfindungsgemäßen Schaltanlage.

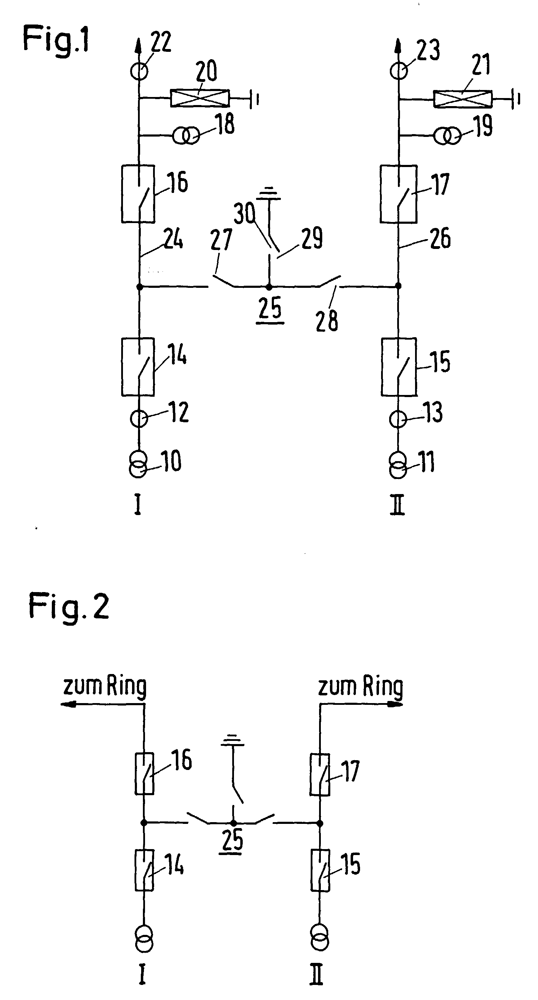

Die Schaltungsanordnung gemäß Fig. 1 besitzt zwei Zweige I und II, die jeweils an einem Transformator 10, 11 angeschlossen sind. In den beiden Zweigen befinden sich je ein Stromwandler 12, 13, je ein Leistungsschalter 14, 15, je ein weiterer Leistungsschalter 16, 17, je ein Spannungswandler 18, 19, je ein Überspannungsableiter 20, 21 und je ein weiterer Stromwandler 22, 23. Damit befinden sich im Leitungszug I ein erster Leistungsschalter 14 und ein zweiter Leistungsschalter 16; im Leitungszug II ist ein dritter Leistungsschalter 15 und ein vierter Leistungsschalter 17 eingeschaltet. An den Leitungspfad 24 zwischen dem ersten und dem zweiten Leistungsschalter 16 schließt ein Steg 25 an, dessen anderes Ende in den Leiterpfad 26 zwischen dem dritten und dem vierten Leistungsschalter 15, 17 angeschlossen ist. Der Steg 25 enthält in Reihe einen Lasttrennschalter 27 und einen sog. einfachen Trennschalter 28. Zwischen den beiden Schaltern 27 und 28 ist eine Erdungsleitung 29 geschaltet, in der ein Erdungsschalter 30, bevorzugt ein Schnellerder 30 eingeschaltet ist.

Der Vorteil der Anordnung gemäß Fig. 1 besteht in folgendem:

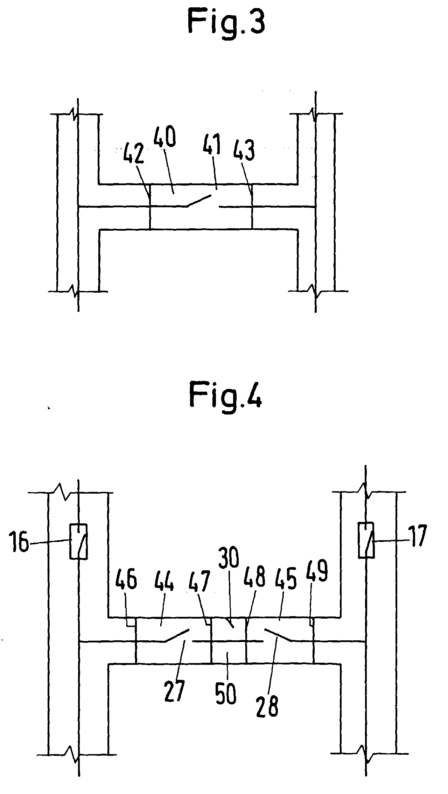

Wenn z. B. der Leistungsschalter 16 in der Leitung I abgeschaltet werden soll, dann kann der Leitungszug II aus dem Leitungszug I mitversorgt werden. Beim Ausbau und bei einer Reparatur am Leistungsschalter 16 kann der Trennschalter 27 geöffnet werden; dadurch erhält man einerseits die Möglichkeit, daß der Pfad 25 über den Erder 30 geerdet werden kann. Andererseits sind im Steg 25 zwei Schottungsisolatoren vorgesehen, so daß hier eine doppelte Schottung vorhanden ist, wodurch die Sicherheit für das Personal erheblich verbessert wird. Bei der bekannten Schaltungsanordnung waren zusätzlich zwei Trennschalter in den Leitungszügen I und II erforderlich; diese beiden Trennschalter können dann weggelassen werden, so daß in dem Steg 25 zwar ein weiterer Schalter hinzukommt, für den aber zwei Schalter in den Leitungen I und II wegfallen können. Man erkennt die Schottung mit den Vorteilen anhand der Fig. 3 und 4.

Die in der Fig. 3 gezeichnete bekannte Anordnung besitzt einen Schottungsraum 40, in dem sich der eine Trennschalter 41 befindet; dieser Schottungsraum 40 ist mittels zwei Schottisolatoren 42 und 43 abgeschottet. Bei der erfindungsgemäßen Anordnung, siehe Fig. 4, sind zwei Schottungsräume 44 und 45 mit Schottungsisolatoren 46, 47, 48 und 49 vorgesehen; zusätzlich ist ein weiterer abgeschotteter Raum 50 zwischen den beiden Schottisolatoren 47 und 48 vorhanden, in dem sich der Erdungsschalter 30 befindet. In den Schottungsräumen 44 und 45 befinden sich die Trennschalter 27 und 28. Wenn die beiden Trennschalter 27 und 28 geöffnet sind, dann sind für eine Revision des Schalters 16 die zwei Schottisolatoren 47 und 48 vorhanden, so daß dadurch eine doppelte Schottung mit erhöhten Personalsicherheit erreicht wird.

An der angegebenen Literaturstelle, Seite 463, links unten, ist eine Ringsammelschienenanordnung dargestellt; die erfindungsgemäße H-Schaltung kann auch in einer solchen Ringsammelschienenanordnung verwendet werden, wobei an den Zweigen I und II Abzweige anschließen, die Teil einer Ringschaltung sind, siehe Fig. 2.

## Patentansprüche

1. Schaltanlage in H-Schaltung, mit wenigstens je einem Leistungsschalter in je einer H-Schenkelleitung und einer die beiden Schenkelleitungen verbindenden Stegleitung, in der wenigstens ein Schalter untergebracht ist, dadurch gekennzeichnet, daß in der Stegleitung (25) zwei Trennschalter (27, 28) eingesetzt sind, und daß der zwischen den Trennschaltern (27, 28) liegende Stegleitungsabschnitt über einen Erdungsschalter (30) geerdet ist.

2. Schaltanlage nach Anspruch 1, dadurch gekennzeichnet, daß in jeder Schenkelleitung zwei Leistungsschalter (14, 16; 15, 17) eingesetzt sind und daß die Stegleitung mit ihren Enden jeweils zwischen den Leistungsschaltern (14, 16; 15, 17) an den Schenkelleitungen anschließt.

3. Schaltanlage nach einem der Ansprüche 1 oder 2, dadurch gekennzeichnet, daß einer der beiden Trennschalter (27, 28) in der Stegleitung (25) ein Lasttrennschalter ist.
